(19) **Europäisches Patentamt**
**European Patent Office**
**Office européen des brevets**

(11) **EP 4 682 200 A1**

(12) **EUROPEAN PATENT APPLICATION**

(43) Date of publication:
**21.01.2026 Bulletin 2026/04**

(21) Application number: **24189214.0**

(22) Date of filing: **17.07.2024**

(51) International Patent Classification (IPC):
***C08L 23/0807*** (2025.01)

(52) Cooperative Patent Classification (CPC):
(C-Sets available)
**C08L 23/0815;** C08L 2205/035; C08L 2207/066;
C08L 2207/20 (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• LIU, Yi
**4021 Linz (AT)**
• ANKER, Martin
**444 86 Stenungsund (SE)**

(74) Representative: **Kador & Partner Part mbB**
**Corneliusstraße 15**
**80469 München (DE)**

(54) **MIXED VIRGIN/ RECYCLED POLYETHYLENE COMPOSITION WITH IMPROVED LONG-TERM STABILITY**

(57) A mixed virgin/ recycled polyethylene composition having a melt flow rate, MFR2, in a range of from 0.01 to 2.0 g/10min, (determined according to ISO1133), and a density in a range of from 900.0 to 965.0 kg/m³, determined according to ISO 1183-1:2019, comprising 35.0 wt.% or more of a recycled polyethylene fraction (rPE), relative to the total weight of the mixed virgin/ recycled polyethylene composition; wherein said recycled polyethylene fraction (rPE) has a total amount of ethylene units (C2 units) of at least 90.0 wt.% as determined by quantitative 13C{1H} NMR spectroscopy as described herein; a total amount of continuous propylene units (C3 units) in an amount of from 0.0 to 2.0 wt.% determined by quantitative 13C{1H} NMR spectroscopy as described herein; at least one of a content of iron (Fe) of 65 ppm or less, a content of titanium (Ti) of 100 ppm or less, a content of zinc (Zn) of 100 ppm or less, a content of chlorine (Cl) of 200 ppm or less, or a content of sulphur (S) of 40 ppm or less, determined by x-ray fluorescence (XRF); wherein a total content of Fe, Ti, Zn, Cl and S amounts to at least 10 ppm; and wherein said mixed virgin/ recycled polyethylene composition further comprises at least one virgin polyethylene component (B). A method for preparing the mixed virgin/ recycled polyethylene composition, an article comprising the same and the use of the mixed virgin/ recycled polyethylene composition for the production of wire and/ or cable jacketing.

**EP 4 682 200 A1**

(52) Cooperative Patent Classification (CPC): (Cont.)

C-Sets
**C08L 23/0815, C08L 23/0815, C08L 23/0815;**
C08L 2207/066, C08L 2207/062, C08L 23/0815

**Description**

The present invention relates to mixed virgin/ recycled polyethylene composition s having excellent weathering resistance and oxidation induction time, to a method for preparing the same, to articles comprising the same and to its use for wire and cable applications.

**Background**

Polyolefins, in particular polyethylene and polypropylene are increasingly consumed in large amounts in a wide range of applications, including packaging for food and other goods, fibres, automotive components, wires and cables, and a great variety of manufactured articles.

Taking into account the huge amount of waste collected compared to the amount of waste recycled back into the stream, there is still a great potential for intelligent reuse of plastic waste streams and for mechanical recycling of plastic wastes.

Recycled polyethylene is contaminated by both organic and inorganic substances. The effectiveness of additivation for recyclate-containing composition can be reduced due to the presence of contaminations in the recyclate, e.g. PP, other foreign polymers including PET, PA, PS, etc., unwanted metals, and functional groups introduced in the course of recycling. In particular, metals such as Co, Fe, Cu, Mo, Ti, Zn are reported in the literatures to negatively affect thermo-photo stability.

Likewise, elements such as Cl and S have been found to be detrimental to photo-thermal stability as they react with stabilizers (e.g. HALS).

Moreover, in a PP/PE blend, PP was suggested to oxidize first and accelerate the oxidation of PE due to the presence of oxidation sites in the PE-PP interfaces. According to literature, the stability against aging observed for different polyethylene materials follows the order: HDPE > LLDPE > LDPE.

Thus, usually a high LDPE content is associated with a low stability towards aging.

In recycled low density PE materials, both LLDPE and LDPE are found, and their ratio varies depending on the feedstock.

It is therefore anticipated that recyclate-containing polyethylene compounds have reduced long-term stability - as compared to virgin polyethylene - and, thus, perform poorly with respect to weathering resistance at elevated temperatures. As a result, manufacturers still tend to refrain from using recycled materials in demanding applications. In other words, the use of recycled polyolefin materials is mostly restricted to low-cost, non-demanding applications, such as e.g. in construction or furniture.

One approach to overcome the above drawbacks of recyclate-containing compounds consists in the use of metal deactivators in the compositions. This approach can be found, for example, in CA2091530 A, WO2000058975 A1 or GB2252324A.

Another approach reported in the state of the art involves the addition of a thermoplastic elastomer to recyclate containing compositions; see WO2018146628 A1. Further, the use of compatibilizers has also been suggested; see CN112745547 A.

Due to the enormous environmental and economic impact of recyclate usage, there is still a need to provide alternative means to improve the long-term stability - and thus, weathering resistance- of recyclate-containing polyethylene compositions.

**Summary of the invention**

The objects underlying the present invention are to provide a mixed virgin/ recycled polyethylene composition that addresses the above-described needs and disadvantages.

Accordingly, the present invention provides a mixed virgin/ recycled polyethylene composition s having a melt flow rate, $MFR_2$, of from 0.01 to 2.0 g/10min (determined according to ISO1133) and a density of from 900.0 to 965.0 kg/m$^3$, comprising 35.0 wt.% or more of a recycled polyethylene fraction (rPE); wherein said recycled polyethylene fraction (rPE) has:

a) a total amount of ethylene units (C2 units) of at least 90 wt.% as determined by quantitative $^{13}C\{^1H\}$ NMR spectroscopy;

b) a total amount of continuous propylene units (C3 units) in an amount of from 0.0 to 2.0 wt.% determined by quantitative $^{13}C\{^1H\}$ NMR spectroscopy;

c) at least one of

c1) a content of Fe of 65 ppm or less,
c2) a content of Ti of 100 ppm or less,
c3) a content of Zn of 100 ppm or less,
c4) a content of Cl of 200 ppm or less, or
c5) a content of S of 40 ppm or less,
determined by x-ray fluorescence (XRF);

wherein a total content of Fe, Ti, Zn, Cl and S amounts to at least 10 ppm;

and wherein said mixed virgin/ recycled polyethylene composition further comprises at least one virgin polyethylene component (B).

The present invention further provides a method for preparing a mixed virgin/ recycled polyethylene composition as described above comprising the steps of melting, blending, and extruding the recycled polyethylene fraction (rPE), the at least one virgin polyethylene component (B), and optionally a second virgin polyethylene component (C) in an extruder.

Moreover, the present invention relates to an article comprising a mixed virgin/ recycled polyethylene composition as detailed above, as well as to the use of a mixed virgin/ recycled polyethylene composition as detailed above for the production of wire and/ or cable jacketing.

## Detailed description of the invention

The present invention relates to a mixed virgin/ recycled polyethylene composition having a melt flow rate, MFR2, in a range of from 0.01 to 2.0 g/10min, determined according to ISO1133, and a density in a range of from 900.0 to 965.0 kg/m$^3$, determined according to ISO 1183-1:2019; the composition comprising 35.0 wt.% or more of a recycled polyethylene fraction (rPE), relative to the total weight of the mixed virgin/ recycled polyethylene composition; wherein said recycled polyethylene fraction (rPE) has:

a) a total amount of ethylene units (C2 units) of at least 90.0 wt.% as determined by quantitative $^{13}C\{^{1}H\}$ NMR spectroscopy as described herein;

b) a total amount of continuous propylene units (C3 units) in an amount of from 0.0 to 2.0 wt.% as determined by quantitative $^{13}C\{^{1}H\}$ NMR spectroscopy as described herein

c) at least one of

c1) a content of iron (Fe) of 65 ppm or less,
c2) a content of titanium (Ti) of 100 ppm or less,
c3) a content of zinc (Zn) of 100 ppm or less,
c4) a content of chlorine (Cl) of 200 ppm or less, or
c5) a content of sulphur (S) of 40 ppm or less,
determined by x-ray fluorescence (XRF);

wherein a total content of Fe, Ti, Zn, Cl and S amounts to at least 10 ppm;

and wherein said mixed virgin/ recycled polyethylene composition further comprises at least one virgin polyethylene component (B).

In the context of the present invention, the expressions *"virgin polyethylene compound"* or *"virgin polyethylene composition"* refer to newly produced polyethylene materials prior to their first use, which have not yet been recycled.

In the context of the present invention, the expression *"recycled polyethylene"* refers to a polyethylene material produced predominantly (i.e. 50 wt.% or more, preferably 51 to 100 wt.%, more preferably 75 wt.% to 100 wt. %, even more preferably 95 wt.% to 100 wt.%, for example 99 wt.%) from raw materials obtained from recovered sources, such as monomers obtained via the chemical recycling of plastic waste or, preferably, polymer material obtained from mechanical recycling of (mixed) plastic waste. Recycled polyethylene materials are considered to be structurally different from virgin polyethylene materials in that the overall variance of the composition is broader than in case of virgin materials. For example, the molecular weight distribution of recycled polyethylene materials may be broader than that of virgin PE materials. Alternatively, or in addition, recycled polyethylene materials may be characterized in that the comprise higher amounts of contaminations, such as organic contaminations (e.g. organic additives, residual amounts of polymeric materials of different polymer classes) and/ or inorganic contaminations (e.g. metal contaminants, residual fillers or pigments, halogens, sulphur).

In the context of the present invention, the expression *"mixed virgin/ recycled polyethylene composition"* refers to a polymer compositions comprising a mixture of at least one virgin polyethylene compound and at least one recycled polyethylene compound.

Preferably, the mixed virgin/ recycled polyethylene composition of the present invention further comprises a second virgin polyethylene component (C).

Preferably, the mixed virgin/ recycled polyethylene composition of the present invention is free of metal deactivators.

Preferably, the mixed virgin/ recycled polyethylene composition of the present invention further comprises at least one antioxidant.

Preferably, the mixed virgin/ recycled polyethylene composition of the present invention is characterized by an OCS gel content > 1000$\mu$m of said recycled polyethylene fraction (rPE) of at most 100/m$^2$, more preferably of at most 50/m$^2$, even more preferable of at most 10/m$^2$, such as in a range of from 0 to 100/m$^2$, more preferably of from 1 to 50/m$^2$, even more preferably of from 2 to 10/m$^2$; and/ or by an OCS gel content in a range of from 600 to 1000 $\mu$m of said recycled polyethylene fraction (rPE) of at most 200/m$^2$, more preferably of at most 150/m$^2$, even more preferable of at most 95/m$^2$, such as in a range of from 0 to 200/m$^2$, preferably of from 5 to 150/m$^2$, more preferably of from 10 to 95/m$^2$.

Preferably, the mixed virgin/ recycled polyethylene composition of the present invention is further characterized in that said recycled polyethylene fraction (rPE) simultaneously has at least two, preferably at least three, and more preferably all of: a content of Fe in a range of from 0 to 65 ppm, a content of Ti in a range of from 0 to 100 ppm, a content of Zn in a range of from 100 ppm, a content of Cl in a range of from 0 to 200 ppm, and a content of S in a range of from 0 to 40 ppm, determined by x-ray fluorescence (XRF).

Preferably, the mixed virgin/ recycled polyethylene compositions of the present invention has a total content of Fe, Ti, Zn, Cl and S amounts amounting to. at least 30 ppm, more preferably at least 50 ppm, even more preferably at least 60 ppm, and still more preferably at least 70 ppm.

Preferably, the mixed virgin/ recycled polyethylene composition of the present invention is further characterized in that said at least one virgin polyethylene component (B) is selected from ethylene homo- or copolymers having a density in a range of from 910.0 to 960.0 kg/m$^3$ and a MFR2 in a range of from 0.01 to 2.0 g/10min and/ or a MFR5 in a range of from 0.01 to 10 g/10min.

The mixed virgin/ recycled polyethylene composition of the present invention may further comprise a second virgin polyethylene component (C), wherein, preferably, said second virgin polyethylene component (C) is an ethylene copolymer.

More preferably, said second virgin polyethylene component (C) is a copolymer of ethylene and 1-octene, preferably having a density of from 850.0 to 880.0 kg/m$^3$ and a MFR2 of from 0.2 to 0.8 g/10min.

The mixed virgin/ recycled polyethylene composition according to the present invention preferably has a strain at break of at least 500% without weathering and determined as detailed herein below.

The mixed virgin/ recycled polyethylene composition according to the present invention preferably has a stress at break of at least 15.0 MPa without weathering and determined as detailed herein below.

The mixed virgin/ recycled polyethylene composition according to the present invention preferably has an oxidation induction time (OIT) at 200°C of at least 60 min.

The present invention further relates to a method for preparing a mixed virgin/ recycled polyethylene composition as described herein. Said method comprises the steps of melting, blending, and extruding the recycled polyethylene fraction (rPE), the at least one virgin polyethylene component (B), and optionally a second virgin polyethylene component (C) in an extruder.

Further, the present invention relates to an article comprising the mixed virgin/ recycled polyethylene composition as described herein.

And finally, the present invention relates to the use of a mixed polyethylene composition as described herein to produce wire and/ or cable jacketing.

In the following, the individual components and properties of the inventive compositions are described in more detail. Unless otherwise specified, the parameters mentioned herein are measured as detailed herein below in the experimental section.

According to a particular preferred embodiment of the invention, the mixed virgin/ recycled polyethylene composition has a melt flow rate, MFR2, of from 0.01 to 2.0 g/10min, a density of from 900.0 to 965.0 kg/m$^3$ and comprises from 30.0 to 95.0 wt.%, preferably from 35.0 to 85.0 wt.%, more preferably from 40.0 to 75.0 wt.%, even more preferably from 45.0 to 65.0 wt.%, based on the total weight of the composition, of a recycled polyethylene fraction (rPE);

wherein said recycled polyethylene fraction (rPE) has:

a) a total amount of ethylene units (C2 units) of at least 90.0 wt.% as determined by quantitative $^{13}C\{^1H\}$ NMR spectroscopy as described herein;

b) a total amount of continuous propylene units (C3 units) in an amount of from 0.0 to 2.0 wt.% determined by quantitative $^{13}C\{^1H\}$ NMR spectroscopy as described herein

c) at least one of

 c1) a content of Fe of 65 ppm or less,
 c2) a content of Ti of 100 ppm or less,
 c3) a content of Zn of 100 ppm or less,
 c4) a content of Cl of 200 ppm or less, or
 c5) a content of S of 40 ppm or less,
 determined by x-ray fluorescence (XRF);

with a total content of Fe, Ti, Zn, Cl and S amounting to at least 10 ppm;

and wherein said mixed virgin/ recycled polyethylene composition further comprises at least two distinct virgin polyethylene components (B) and at least one additive (D), preferably at least one antioxidant.

Further, according to another particularly preferred embodiment of the present invention, the mixed virgin/ recycled polyethylene composition has a melt flow rate, MFR2, of from 0.01 to 2.0 g/10min, a density of from 900.0 to 965.0 kg/m$^3$ and comprises from 30.0 to 95.0 wt.%, preferably from 35.0 to 85.0 wt.%, more preferably from 40.0 to 75.0 wt.%, even more preferably from 45.0 to 65.0 wt.%, based on the total weight of the composition, of a recycled polyethylene fraction (rPE);

wherein said recycled polyethylene fraction (rPE) has:

a) a total amount of ethylene units (C2 units) of at least 90.0 wt.% as determined by quantitative $^{13}C\{^1H\}$ NMR spectroscopy as described herein;

b) a total amount of continuous propylene units (C3 units) in an amount of from 0.0 to 2.0 wt.% determined by quantitative $^{13}C\{^1H\}$ NMR spectroscopy as described herein

c) at least one of

 c1) a content of Fe of 65 ppm or less,
 c2) a content of Ti of 100 ppm or less,
 c3) a content of Zn of 100 ppm or less,
 c4) a content of Cl of 200 ppm or less, or
 c5) a content of S of 40 ppm or less,
 determined by x-ray fluorescence (XRF);

with a total content of Fe, Ti, Zn, Cl and S amounting to at least 10 ppm;

and wherein said mixed virgin/ recycled polyethylene composition further comprises at least one virgin polyethylene component (B), at least one second virgin polyethylene component (C) and at least one additive (D), preferably at least one antioxidant.

The compositions according to the present invention, in particular according to each of the two particularly preferred embodiments herein above, may optionally comprise pigments (E), preferably carbon black.

_Properties of the mixed virgin/ recycled polyethylene composition_

The composition of the present invention has a density in a range of from 900.0 to 965.0 kg/m$^3$, preferably of from 910.0 to 960.0 kg/m$^3$ and more preferably of from 915.0 to 955.0 kg/m$^3$.
Aside from the recycled polyethylene fraction (rPE) and at least one virgin polyethylene component (B), the mixed virgin/ recycled polyethylene composition of the present invention may optionally further comprise one or more of:

- a component (C);
- additives (D); and/ or
- pigments (E), preferably carbon black.

Since the presence of carbon black has an influence on the density of the composition, a composition comprising carbon black preferably has a density of from 910.0 kg/m$^3$ to 965.0 kg/m$^3$, preferably from 920.0 to 960.0 kg/m$^3$, most preferably from 925.0 to 955.0 kg/m$^3$.

On the other hand, a composition which is free of carbon black preferably has a density of from 900.0 kg/m$^3$ to 950.0 kg/m$^3$, preferably from 910.0 to 945.0 kg/m$^3$, most preferably from 915.0 to 940.0 kg/m$^3$.

Further, the composition according to the present invention is characterized by a MFR2 in a range of from 0.01 to 2.0 g/10min (determined according to ISO1133), preferably of from 0.02 to 1.5 g/10min and more preferably of from 0.05 to 1.0 g/1min. Moreover, the composition according to the present invention may have a MFR5 (determined according to ISO1133) in a range of from 0.5 to 5.0 g/10min, preferably of from 0.8 to 3.0 g/10min and more preferably of from 1.0 to 2.0 g/10min; and/ or a MFR21 in a range of from 5.0 to 100.0 g/10min, preferably of from 10.0 to 60.0 g/10min and more preferably of from 15.0 to 40.0 g/10min.

Preferably, the mixed virgin/ recycled polyethylene composition according to any one of the preceding claims has an oxidation induction time (OIT) at 200°C of at least 60 min, preferably of at least 80 min, more preferably at least 100 min, even more preferably at least 120 min and still more preferably at least 130 min.

Preferably, the composition according to the present invention is further characterized by having a strain at break of at least 500% without weathering and/ or a stress at break of at least 15.0 MPa without weathering, preferably having a strain at break of at least 600% without weathering and/ or a stress at break of at least 17.0 MPa without weathering, more preferably having a strain at break of at least 650% without weathering and/ or a stress at break of at least 19.0 MPa without weathering.

Preferably, the composition according to the present invention has a strain at break (%) after 1000 hours' weathering (as described in the measurement methods) that differs from the strain at break determined without weathering (as described in the measurement methods) by at most 30%, preferably at most 15%, more preferably at most 10%, even more preferably at most 5%.

Preferably, the composition according to the present invention has a strain at break (%) after 2000 hours' weathering (as described in the measurement methods) that differs from the strain at break determined without weathering (as described in the measurement methods) by at most 40%, preferably at most 30%, more preferably at most 25%, even more preferably at most 20%.

The composition according to the present invention preferably has an OCS gel content:

- greater than 1000 $\mu$m of at most 10/m$^2$, preferably of at most 5/m$^2$, more preferably of at most 2/m$^2$, such as in a range of from 0 to 10/m$^2$, preferably of from 0 to 5/m$^2$, more preferably of 0 to 2/m$^2$; and/ or

- 600 to 1000 $\mu$m of at most 10/m$^2$, preferably of at most 5/m$^2$ and more preferably of at most 2/m$^2$, such as in a range of from 0 to 10/m$^2$, preferably of from 0 to 5/m$^2$ and more preferably of from 0 to 2/m$^2$; and/or

- 300 to 599 $\mu$m of at most 600/m$^2$, preferably of at most 500/m$^2$ and more preferably of at most 400/m$^2$, such as in a range of from 0 to 600/m$^2$, preferably of from 10 to 500/m$^2$ and more preferably of from 50 to 400/m$^2$; and/ or

- 100 to 299 $\mu$m of at most 20000/m$^2$, preferably of at most 15000/m$^2$ and more preferably of at most 8500/m$^2$, such as in a range of from 0 to 20000/m$^2$, preferably of from 100 to 15000/m$^2$ and more preferably of from 1000 to 8500/m$^2$.

The composition may further have a content of OCS (Optical Control Systems) contaminations, determined as detailed herein below,

- greater than 1000 $\mu$m of at most 15/m$^2$, preferably of at most 10/m$^2$, more preferably of at most to 5/m$^2$, such as in a range of from 0.0 to 15/m$^2$, preferably of from 0.0 to 10/m$^2$, more preferably of from 0.0 to 5/m$^2$; and/ or

- 600 to 1000 $\mu$m of at most 50/m$^2$, preferably of at most 30/m$^2$ and more preferably of at most 15/m$^2$, such as in a range of from 0.0 to 50/m$^2$, preferably of from 0.1 to 30/m$^2$ and more preferably of from 0.2 to 15/m$^2$; and/or

- 300 to 599 $\mu$m of at most 1000/m$^2$, preferably of at most 500/m$^2$ and more preferably of at most 100/m$^2$, such as in a range of from 0 to 1000/m$^2$, preferably of from 10 to 500/m$^2$ and more preferably of from 50 to 100/m$^2$; and/ or

- 100 to 299 $\mu$m of at most 50/m$^2$, preferably of at most 30/m$^2$ and more preferably of at most 10/m, such as in a range of from 0.0 to 50/m$^2$, preferably of from 1.0 to 30/m$^2$ and more preferably of from 3 to 10/m$^2$.

The composition according to the present invention preferably has a total amount of ethylene units (C2 units) of at least 90.0 wt.%, preferably at least 92.0 wt.% and more preferably at least 93.0 wt.% as determined by quantitative $^{13}$C{$^1$H} NMR spectroscopy. In other words, the total amount of ethylene units (C2 units) in the composition of the present invention is in a range of from 90.0 to 100.0 wt. %.

The composition according to the present invention preferably further has a total amount of continuous C3 units originating from polypropylene (PP) in an amount of from 0.05 to 1.5 wt.%, preferably of 0.1 to 1.0 wt.% and more preferably of from 0.15 to 0.5 wt.% determined by quantitative $^{13}$C{$^1$H} NMR spectroscopy.

In addition, the composition according to the present invention may have a total amount of C4 units in a range of from 0.0 to 10.0 wt.%, preferably from 0.5 to 7.0 wt.% and more preferably from 1.0 to 5.0 wt.% as determined by quantitative $^{13}$C{$^1$H} NMR spectroscopy.

The composition according to the present invention may also have a total amount of C6 units in a range of from 0.0 to 5.0 wt.%, preferably from 0.1 to 4.0 wt.% and more preferably from 0.2 to 2.0 wt.% as determined by quantitative $^{13}$C{$^1$H} NMR spectroscopy.

Unless otherwise indicated, any amounts relating to the content of components (rPE), (B), (C), (D) and (E) and given in wt.% refer to the wt.% relative to the total weight of the mixed virgin/ recycled polyethylene composition.

Unless otherwise indicated, any amounts comprised in the composition according to the present invention and/ or in the recycled polyethylene fraction (rPE) relating to the content of particular repeating units, for example C2 (ethylene) and/ or (continuous) C3 (propylene) units and/ or C4 and/ or C6 units, as determined by quantitative $^{13}$C{$^1$H} NMR spectroscopy (as described herein below) are to be understood as wt.% relative to the total amount of a fraction that is soluble in 1,1,2,2-tetrachloroethane-d2 (TCE-d2) as measured in said composition or said recycled polyethylene fraction (rPE), respectively. In other words, it is to be understood that the material used for, and amounts determined by, quantitative $^{13}$C{$^1$H} NMR spectroscopy are based only on material that can be dissolved in 1,1,2,2-tetrachloroethane-d2 (TCE-d2); any non-dissolved material being removed.

*Recycled polyethylene fraction (rPE)*

Recycled polyethylene fraction (rPE) may be present in the composition of the present invention in an amount of from 30.0 to 95.0 wt.%, preferably of from 35.0 to 85.0 wt.%, more preferably of from 40.0 to 75.0 wt.%, even more preferably of from 45.0 to 65.0 wt.% based on the total weight of the composition.

Recycled polyethylene fractions (rPE) for use in the present invention are commercially available.

Preferably, rPE comprises low density PE recyclates based on feedstock of post-consumer waste (PCW). Suitable recycled polyethylene fractions are commercially available, for example from Integra Plastics, Steinbeis PolyVert GmbH, Systec Plastics GmbH, Ecoplast Kunststoffrecycling GmbH, Walter Kunststoffe GmbH, etc. Preferably such recycled polyethylene fractions is obtained from Ecoplast Kunststoffrecycling GmbH.

rPE may have a density in a range of from 910.0 to 950.0 kg/m$^3$, preferably of from 915.0 to 940.0 kg/m$^3$ and more preferably of from 925.0 to 935.0 kg/m$^3$.

rPE may have a melt flow rate (MFR2) in a range of from 0.01 to 1.2 g/10min, preferably of from 0.1 to 1.0 g/10min, more preferably of from 0.2 to 0.8 g/10min, even more preferably from 0.25 to 0.5 g/10min; and/ or a melt flow rate (MFR5) in a range of from 0.1 to 5.0 g/10min, preferably of from 0.5 to 3 g/10min, more preferably of from 1.0 to 2.0 g/10min; and/ or a melt flow rate (MFR21) in a range of from 1.0 to 50.0 g/10min, preferably of from 5.0 to 40.0 g/10min and more preferably of from 10.0 to 30.0 g/10min.

rPE has a total amount of ethylene units (C2 units) in a range of from 90.0 to 99.9 wt.%, preferably from 92.0 to 99.0 wt.% and more preferably from 93.5 to 98.0 wt.% as determined by quantitative $^{13}$C{$^1$H} NMR spectroscopy.

rPE further has a total amount of continuous propylene units (C3 units) in an amount of from 0.1 to 2.0 wt.%, preferably from 0.2 to 1.5 wt.% and more preferably of from 0.3 to 1.0 wt.%, determined by quantitative $^{13}$C{$^1$H} NMR spectroscopy. Continuous propylene units (C3 units) detected in the rPE fraction can generally be assumed to originate from polypropylene (PP).

In addition, rPE may have a total amount of C4 units in a range of from 0.0 to 5.0 wt.%, preferably from 0.1 to 4.0 wt.% and more preferably from 0.2 to 2.5 wt.% as determined by quantitative $^{13}$C{$^1$H} NMR spectroscopy.

rPE may also have a total amount of C6 units in a range of from 0.0 to 5.0 wt.%, preferably from 0.1 to 4.0 wt.% and more preferably from 0.2 to 3.5 wt.% as determined by quantitative $^{13}$C{$^1$H} NMR spectroscopy.

Moreover, rPE has at least one of:

- a content of Fe of 65 ppm or less, preferably of from 0 to 60 ppm;
- a content of Ti of 100 ppm or less, preferably of from 0 to 60 ppm;
- a content of Zn of 100 ppm or less, preferably of from 0 to 60 ppm;

- a content of Cl of 200 ppm or less, preferably of from 0 to 130 ppm; and
- a content of S of 40 ppm or less, preferably of from 0 to 25 ppm;

determined by x-ray fluorescence (XRF).

Preferably, said recycled polyethylene fraction (rPE) simultaneously has at least two, more preferably at least three and even more preferably all of the following properties:

- a content of Fe of 65 ppm or less, preferably of from 0 to 60 ppm;
- a content of Ti of 100 ppm or less, preferably of from 0 to 60 ppm;
- a content of Zn of 100 ppm or less, preferably of from 0 to 60 ppm;
- a content of Cl of 200 ppm or less, preferably of from 0 to 130 ppm; and
- a content of S of 40 ppm or less, preferably of from 0 to 25 ppm;

determined by x-ray fluorescence (XRF).

Further, a total (combined) content of Fe, Ti, Zn, Cl and S in rPE is in a range of from 10 or more ppm, such as 10 to 500 ppm; preferably 30 to 450 ppm, more preferably 50 to 400 ppm, even more preferably 60 to 350 ppm, and still more preferably 70 to 310 ppm.

rPE preferably has a water content in a range of from 0 to 300 ppm, more preferably of from 0 to 250 ppm and even more preferably of from 0 to 220 ppm.

rPE preferably has a content of xylene soluble fraction (XHU) in a range of from 0.0 to 2.0 wt.%, more preferably of from 0.1 to 1.0 wt.% and even more preferably of from 0.2 to 0.5 wt.% based on the total weight of rPE.

rPE preferably has an OCS gel content:

- greater than 1000 $\mu$m of at most 100/m$^2$, preferably of at most 50/m$^2$ and more preferably of at most 10/m$^2$, such as in a range of from 0 to 100/m$^2$, preferably of from 0 to 50/m$^2$, more preferably of from 0 to 10/m$^2$; and/ or

- 600 to 1000 $\mu$m of at most 200/m$^2$, preferably of at most 150/m$^2$ and more preferably of at most 50/m$^2$, such as in a range of from 0 to 200/m$^2$, preferably of from 0 to 150/m$^2$ and more preferably of from 1 to 50/m$^2$; and/or

- 300 to 599 $\mu$m of at most 2000/m$^2$, preferably of at most 1500/m$^2$ and more preferably of at most 1000/m$^2$, such as in a range of from 0 to 2000/m$^2$, preferably of from 10 to 1500/m$^2$ and more preferably of from 50 to 1000/m$^2$; and/ or

- 100 to 299 $\mu$m of at most 50000/m$^2$, preferably of at most 30000/m$^2$ and more preferably of at most 15000/m$^2$, such as in a range of from 0 to 50000/m$^2$, preferably of from 100 to 30000/m$^2$ and more preferably of from 1000 to 15000/m$^2$.

rPE may further have a content of OCS contaminations, determined as detailed herein below,

- greater than 1000 $\mu$m in a range of from of at most 100/m$^2$, preferably of at most 10/m$^2$ and more preferably of at most 5/m$^2$, such as 0 to 100/m$^2$, preferably of from 0 to 10/m$^2$, more preferably of from 0 to 5/m$^2$; and/ or

- 600 to 1000 $\mu$m of at most 200/m$^2$, preferably of at most 100/m$^2$ and more preferably of at most 55/m$^2$, such as in a range of from 0 to 200/m$^2$, preferably of from 2 to 100/m$^2$ and more preferably of from 5 to 55/m$^2$; and/or

- 300 to 599 $\mu$m of at most 1000/m$^2$, preferably of at most 500/m$^2$ and more preferably of at most 200/m$^2$, such as in a range of from 0 to 1000/m$^2$, preferably of from 10 to 500/m$^2$ and more preferably of from 50 to 200/m$^2$; and/ or

- 100 to 299 $\mu$m of at most 500/m$^2$, preferably of at most 200/m$^2$ and more preferably of at most 50/m$^2$, such as in a range of from 0 to 500/m$^2$, preferably of from 5 to 200/m$^2$ and more preferably of from 10 to 50/m$^2$.

*First virgin polyethylene component (8)*

The mixed virgin/ recycled polyethylene composition of the present invention comprises at least one virgin polyethylene component (B).

The at least one, first virgin polyethylene component (B) may be present in the mixed virgin/ recycled polyethylene composition of the present invention in an amount of from 5.0 to 70.0 wt.%, preferably of from 15.0 to 65.0 wt.%, more preferably of from 25.0 to 60.0 wt.%, even more preferably of from 35.0 to 55.0 wt.% based on the total weight of the composition.

The at least one virgin polyethylene component (B) may be selected from LDPE (low density polyethylene), LLDPE (linear low density polyethylene), MDPE (medium density polyethylene) and HDPE (high density polyethylene).

Component (B) may further be selected from ethylene homo- and copolymers or mixtures thereof.

Virgin polyethylene component (B) may be unimodal, bimodal or multimodal. Moreover, polyethylene component (B) may comprise a mixture of two or more individual virgin polyethylene polymers, i.e. (B1) and (B2), under the provision that the above criteria are met for the overall mixture of components (B) and/or for each of the separate components (B).

The term "bimodal" as used herein means that the polymer consists of two polyethylene fractions, which have been produced under different polymerization conditions resulting in different (weight average) molecular weights and molecular weight distributions for the fractions. The form of the molecular weight distribution curve, i.e. the appearance of the graph of the polymer weight fraction as a function of its molecular weight, of a bimodal or multimodal polymer will show two or more maxima or is typically distinctly broadened in comparison with the curves for the individual fractions.

The bimodal polyethylene preferably comprises a polyethylene homopolymer and a polyethylene copolymer or two polyethylene copolymers. By ethylene homopolymer is meant a polymer which is formed of essentially only ethylene monomer units, i.e. of 99.9 wt.% ethylene or more. It will be appreciated that minor traces of other monomers may be present due to industrial ethylene containing trace amounts of other monomers.

The polyethylene copolymer is formed from ethylene with at least one other comonomer having at least 4 carbon atoms, e.g. C4-20 olefin. Preferred comonomers are alpha-olefins, especially with 4-8 carbon atoms. Preferably, the comonomer is selected from the group consisting of 1-butene, 1-hexene, 4-methyl-1-pentene, 1-octene, 1,7-octadiene and 7-methyl-1,6-octadiene. The use of 1-butene and 1-hexene is preferred.

Suitable virgin polyethylene components (B) are commercially available and/ or obtainable by a process as described, for example, in EP1327664A1 (bimodal high-density polyethylene; examples section) or EP4023712A1 (Polymer B).

Virgin polyethylene component (B) may have a melt flow rate (MFR2) in a range of from 0.01 to 2.0 g/10min, preferably of from 0.02 to 1.5 g/10min and more preferably of from 0.04 to 1.0 g/10min; and/ or a melt flow rate (MFR5) in a range of from 0.01 to 10.0 g/10min, preferably of from 0.1 to 8.0 g/10min, more preferably of from 0.2 to 5.0 g/10min.

Component (B) may have a density in the range of from 910.0 to 960.0 kg/m$^3$, preferably of from 915.0 to 955.0 kg/m$^3$ and more preferably of from 920.0 to 952.0 kg/m$^3$.

*Second virgin polyethylene component (C)*

The second virgin polyethylene component (C) may be present in the composition of the present invention in an amount of from 0.0 to 20.0 wt.%, preferably from 2.0 to 18.0 wt.%, more preferably from 3.0 to 17.0 wt.%, even more preferably from 4.0 to 16.0 wt.% and most preferably from 5.0 to 15.0 wt.%, based on the total weight of the composition.

The second virgin polyethylene component (C) is different from the (first) virgin polyethylene component (B).

The second virgin polyethylene component (C) may comprise, preferably consist of, a very low-density polyethylene (VLDPE) which can be identified as elastomer. According to the IUPAC definition, an elastomer is a polymer that displays rubber-like elasticity.

Polyethylene based elastomers suitable for use as the second virgin polyethylene component (C) in the context of the present invention are commercially available under the tradenames Queo™, Exact™, Engage™ and others.

The component (C) preferably has:

- a melt flow rate (ISO 1133, 2.16 kg, 190 °C) of from 0.1 to 1.5 g/10min, preferably from 0.2 to 1.2 g/10 min, more preferably from 0.3 to 1.0 g/10 min; and/or

- a density of from 840.0 to less than 900.0 kg/m$^3$, preferably from 850.0 to 890.0 kg/m$^3$, more preferably from 860.0 to 875.0 kg/m$^3$.

Component (C) comprising at least one virgin very low-density polyethylene (VLDPE) preferably has a density of from 840.0 to less than 900.0 kg/m$^3$, preferably from 850.0 to 890.0 kg/m$^3$, more preferably from 860.0 to 875.0 kg/m$^3$.

The component (C) includes as polymeric component a copolymer of ethylene and one or more comonomer units selected from alpha-olefins having from 3 to 12 carbon atoms. It is preferred that the polymeric component is a copolymer of ethylene and 1-butene or a copolymer of ethylene and 1-octene, more preferably a copolymer of ethylene and 1-octene.

The polymeric component of the component (C) is preferably produced in a solution polymerization process using a metallocene catalyst, as known in the art.

The component (C) preferably has one or more, more preferably all of the following properties in any combination:

- a melting temperature, Tm, of from 40 to 60°C, more preferably from 45 to 55°C;
- a glass transition temperature, Tg, of from -65°C to -45°, preferably from - 60°C to -50°C;

- a flexural modulus of from 2.5 MPa to 15.0 MPa, more preferably from 5.0 MPa to 12.0 MPa;
- a tensile stress at break of from 2.0 to 15.0 MPa, more preferably from 4.0 to 10.0 MPa,
- a tensile strain at break of from 200 to 500% more preferably from 300 to 450%,
- a Shore D hardness, measured after 1s according to ISO 868, Shore D 1s, of from 10 to 30, more preferably from 15 to 25; and/or
- a limonene content of less than 0.1 mg/kg.

*Additives (D)*

The composition according to the present invention may further comprise additives.

The total amount of additives (D) comprised in the composition of the present invention may be in a range of from 0.0 to 5.0 wt.%, preferably of from 0.01 to 3.0 wt.%, more preferably of from 0.10 to 2.0 wt.% based on the total weight of the composition.

Suitable additives are usual additives for utilization with polyolefins, such as stabilizers (e.g. antioxidant agents), UV-stabilizers, antistatic agents, and utilization agents (such as processing aid agents).

According to a preferred embodiment, the composition according to the present invention comprises at least one antioxidant.

Moreover, it is preferred that the composition according to the present invention is free of any metal deactivator.

*Pigments (E)*

The composition according to the present invention may further comprise one or more pigments.

In the context of the present invention, pigments, such as carbon black, are not included in the definition of additives, but are considered separately.

The type of pigment, preferably carbon black, to be optionally included in compositions of the present invention is not particularly limited.

Pigments, such as carbon black, impart (black) colour to the polyethylene composition and, at the same time, may protect the composition from UV radiation. Still further, the addition of pigments, preferably carbon black, increases the density of the polyethylene composition compared to that of a composition not comprising any pigments.

The composition according to the present invention may comprise pigments, preferably carbon black, in an amount of from 0.0 to 5.0 wt.%, preferably of from 1.0 to 4.0 wt.%, more preferably of from 2.0 to 3.0 wt.%.

Pigments, preferably carbon black, may be added to the composition in the form of pure pigment, preferably carbon black, or in the form of a masterbatch comprising the pigment, preferably carbon black and a polymeric carrier.

Preferably, pigments, such as carbon black, are added in the form of a master batch, i.e. as a mixture of e.g. a polyethylene carrier and carbon black, in which carbon black (or another pigment) is present in an amount of e.g. 30 to 50 wt.%.

*Method for preparing the mixed virgin/ recycled polyethylene composition*

The composition according to the present invention may be prepared by a method comprising the steps of melting, blending, extruding, and optionally pelletizing the components, viz. the recycled polyethylene fraction (rPE), the at least one virgin polyethylene component (B), optionally a second virgin polyethylene component (C), additives (D), and, optionally pigments (E) such as carbon black, in an extruder.

Preferably, the inventive composition is obtained by melting, blending, extruding and pelletizing the components in a co-rotating twin screw extruder at a screw speed of from 100 to 600 rpm, more preferably from 150 to 500 rpm, even more preferably from 200 to 400 rpm; and/or at a barrel temperature in a range of from 140 to 270 °C, preferably from 160 to 260 °C, more preferably from 170 to 250°C, still more preferably from 180 to 240°C.

*Article and Use*

The composition according to the present invention may be used for the production of articles, in particular for the production of wire and/ or cable jacketing.

Thus, the present invention also relates to an article, preferably a wire and/ or cable jacketing comprising the mixed virgin/ recycled polyethylene composition according to the present invention.

**Examples**

Measurement methods

### a) Melt Flow Rate (MFR)

Melt flow rates were measured with a load of 2.16 kg (MFR2), 5.0 kg (MFR5) or 21.6 kg (MFR21) at 190°C as indicated. The melt flow rate is that quantity of polymer in grams which the test apparatus standardized to ISO 1133:2022 extrudes within 10 minutes at a temperature of 190°C under a load of 2.16 kg, 5.0 kg or 21.6 kg.

### b) Density

For determining the density of non-cellular plastics, the ISO 1183-1:2019 standard method A immersion method is used (Archimedean principle). A specimen is weighed in air and immersed in a liquid (normally iso-dodecane), whose density is lower than that of the specimen. The value of this force is the same as that of the weight of the liquid displaced by the volume of the specimen.

This test is done on compression moulded plates of PE (polyethylene). For compression moulding process the following parameters are used:

| PE | Time [s] | Temperature [°C] | Pressure Hydraulic [bar] | Pressure Mould [N/cm$^2$] |
|---|---|---|---|---|
| Preheating | 360 | 180 | 5 | 7 |
| Moulding | 300 | 180 | 50 | 65 |
| | 300 | 180 | 200 | 262 |
| | 840 | 23 | | |
| Cooling | 15 K/min | | 200 | 262 |
| | **<40°C** demoulding temperature | | | |

The specimens are conditioned for at least 16 h at 23±2°C after compression moulding (PE) and density measurement is conducted 24±2 h after compression moulding (PE).

Isopropanol is used as immersion liquid, when the standard immersion liquid iso-dodecane, which comes in contact with the specimen during the measurement, has an effect on the specimen (e.g. swelling the specimen).

Test temperature: 23±2°C
Immersion liquid: isododecane or isopropanol
Buoyancy correction: yes

### c) NMR measurement

**NMR measurement of recycled polyethylene and the mixed virgin/ recycled polyethylene composition**

Quantitative $^{13}$C{$^1$H} NMR spectra were recorded in the solution-state using a Bruker Avance III 400MHz NMR spectrometer operating at 400.15 and 100.62 MHz for $^1$H and $^{13}$C respectively. All spectra were recorded using a $^{13}$C optimised 10 mm extended temperature probe head at 125°C using nitrogen gas for all pneumatics. Approximately 200 mg of material was dissolved in 3 ml of 1,1,2,2-tetrachloroethane-d2 (TCE-$d_2$) along with chromium-(III)-acetylacetonate (Cr(acac)$_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), $\gamma$-carbons (g 29.6 ppm) the 4s and the threeB4 carbon (to be compensated for later on) is taken between 30.9 ppm and 29.3 ppm excluding the T$\beta\beta$ from polypropylene. The amount of C2 related carbons was quantified using all mentioned signals according to the following equation:

$$fC_{C2total} = (Iddg-ItwoB4) + (IstarB1*6) + (IstarB2*7) + (ItwoB4*9) + I(threeB5*10) + ((IstarB4plus-ItwoB4-IthreeB5)*7) + (I3s*3)$$

Characteristic signals corresponding to the presence of polypropylene (PP, continuous C3)) were observed at 46.7 ppm, 29.0 ppm and 22.0 ppm. The amount of PP related carbons was quantified using the integral of S$\alpha\alpha$ at 46.6 ppm:

$$fC_{PP} = Is\alpha\alpha * 3$$

The weight percent of the C2 fraction and the polypropylene can be quantified according following equations:

$$wt_{C2fraction} = fC_{C2total} * 100 / (fC_{C2total} + fC_{PP})$$

$$wt_{PP} = fC_{PP} * 100 / (fC_{C2total} + fC_{PP})$$

Characteristic signals corresponding to various short chain branches were observed and their weight percentages quantified as the related branch would be an alpha-olefin, starting by quantifying the weight fraction of each:

$$fwtC2 = fC_{C2total} - ((IstarB1*3) - (IstarB2*4) - (ItwoB4*6) - (IthreeB5*7)$$

$$fwtC3 \text{ (isolated C3)} = IstarB1*3$$

$$fwtC4 = IstarB2*4$$

$$fwtC6 = ItwoB4*6$$

$$fwtC7 = IthreeB5*7$$

Normalisation of all weight fractions leads to the amount of weight percent for all related branches:

$$fsum_{wt.\%total} = fwtC2 + fwtC3 + fwtC4 + fwtC6 + fwtC7 + fC_{PP}$$

$$wtC2total = fwtC2 * 100 / fsum_{wt.\%total}$$

$$wtC3total = fwtC3 * 100 / fsum_{wt.\%total}$$

$$wtC4total = fwtC4 * 100 / fsum_{wt.\%total}$$

$$wtC6total = fwtC6 * 100 / fsum_{wt.\%total}$$

$$wtC7total = fwtC7 * 100 / fsum_{wt.\%total}$$

The content of LDPE can be estimated assuming the B5 branch, which only arises from ethylene being polymerised under high pressure process, being almost constant in LDPE. We found the average amount of B5 if quantified as C7 at 1.46 wt.%. With this assumption it is possible to estimate the LDPE content within certain ranges (approximately between 20 wt.% and 80 wt.%), which are depending on the SNR ratio of the threeB5 signal:

$$wt.\%LDPE = wtC7total * 100 / 1.46$$

It is to be understood that the material used for, and amounts determined by, quantitative $^{13}C\{^1H\}$ NMR spectroscopy are based only on material that can be dissolved in 1,1,2,2-tetrachloroethane-d2 (TCE-d2); any non-dissolved material being removed.

References:

| | |
|---|---|
| zhou07 | Zhou, Z., Kuemmerle, R., Qiu, X., Redwine, D., Cong, R., Taha, A., Baugh, D. Winniford, B., J. Mag. Reson. 187 (2007) 225 |
| busico07 | Busico, V., Carbonniere, P., Cipullo, R., Pellecchia, R., Severn, J., Talarico, G., Macromol. Rapid Commun. 2007, 28, 1128 |
| singh09 | Singh, G., Kothari, A., Gupta, V., Polymer Testing 28 5 (2009), 475 |
| randall89 | J. Randall, Macromol. Sci., Rev. Macromol. Chem. Phys. 1989, C29, 201. |
| brandolini00 | A. J. Brandolini, D. D. Hills, NMR Spectra of Polymers and Polymer Additives, Marcel Dekker Inc., 2000. |

**d) Tensile properties**

**Tensile testing of specimens with/without weathering**

5A ISO 527-2:2012 dog bone specimens were milled from compression moulded plaques of 2 mm thickness. The compression moulding was conducted according to ISO 17855-2:2023 but at a moulding temperature of 200°C. For evaluation of resistance to weathering, the specimens were exposed to a xenon-arc lamp light following the standard ISO 4892-2:2013 + Amd 1:2021 "Methods of exposure to laboratory light sources", method a (humidification of the chamber air). The machine used for the conditioning was an Atlas - Ci5000 weatherometer, with the following conditions:

| | |
|---|---|
| Machine: | Atlas Ci5000 WEATHER-OMETER |
| Irradiance @ 300-400nm: | 60 W/m$^2$ |
| Irradiance @ 340nm: | 0.5 W/m$^2$ |
| Black standard temperature: | 65 +/- 2 °C |
| Air temperature | 38 +/- 3 °C |
| Relative humidity: | 70% |
| Rain cycle: | 102 min dry, followed by 18min rain |

After exposure for 1000 or 2000 hours, the specimens were taken out. Tensile testing was conducted according to ISO 527-2:2012 at 23±2°C and 50±10% humidity to determine the tensile properties of the specimens with/without exposure. A test speed of 0.5 mm/min was used to measure the tensile modulus and that of 50 mm/min for all the other tensile properties.

**e) Element content**

The instrument used for the XRF measurements was a wavelength dispersive Zetium (2,4kW) from Malvern Panalytical. The instrument was calibrated with polyolefin based standard sets from Malvern Panalytical i.e Toxel (for Cu and Pb), RoHS (for Cl) and custom set of calibration standards from Malvern Panalytical according to the following table for Ti, S and Zn:

| Elements | range (ppm) |
|---|---|
| S | 0 - 281 |
| Ti | 0 - 273 |
| Zn | 0 - 576 |

Elements which are not covered by standards (Fe, Co and Mo), or the content is outside of the calibrated standard range, are then analyzed with a semiquantitative mode (software Omnian from Malvern Panalytical). For these results no LODs (Limit of detection) or LOQs (Limit of quantification) are available. If a peak is visible in the scan, it is matched, analyzed, and calculated. If no peak is visible in the area of the element, it is commented as "not detected". The CH content needed to run the semiquantitative evaluation with Omnian was estimated by the software itself.

The analyses are done under vacuum on a plaque with a diameter of 40mm and a thickness of 2mm.

### f) Oxidation Induction Time (OIT)

The oxidation induction time (OIT) at 200 °C was determined with a TA Instrument Q20 according to ISO11357-6:2018. Calibration of the instrument was performed with indium (In) and tin (Sn), according to ISO 11357-1:2023. The maximum error in temperature from calibration was less than 0.1 K. Each polymer sample (cylindrical geometry with a diameter of 5 mm and thickness of $1 \pm 0.1$ mm) with a weight of $10 \pm 2$ mg was placed in an open aluminium crucible, heated from 25 °C to 200 °C at a rate of 20 °C min$^{-1}$ in nitrogen (>99.95 vol.% $N_2$, < 5 ppm $O_2$) with a gas flow rate of 50 mL min$^{-1}$, and allowed to rest for 5 min before the atmosphere was switched to pure oxygen (>99.95 vol.% $O_2$), also at a flow rate of 50 mL min$^{-1}$. The samples were maintained at constant temperature, and the exothermic heat associated with oxidation was recorded. The oxidation induction time was the time interval between the initiation of oxygen flow and the onset of the oxidative reaction. Each presented data point was the average of two independent measurements.

### g) Gel content (OCS)

The cast film samples were produced and optically examined on a small-scale laboratory cast film line with installed camera detection from Optical Control Systems GmbH (OCS).

The line consists of an extruder with a Ø 25 mm screw with an LID ratio of 25. The extruder temperature profile has been set at 190/200/210/210/200°C for the five zones. The extruder is followed by a die with a width of 150 mm and a fixed die gap of 0.5 mm. The film was produced by extrusion at a screw speed of 30 rpm with a thickness of 70 μm. During the extrusion the chill-roll temperature was set at 50°C The gels and contaminations of the film have been detected and counted on 10 m$^2$ of the film during the extrusion process with transmitted light and a 4096-pixel camera. During the measurement an LED light source was used. The resolution of the camera is x/y 25 μm on the film. The defects, i.e., gels, contaminations, were divided into 4 size-classes (100-299 μm; 300-599 μm; 600-1000 μm; >1000 μm), and the results are presented as the number of defects per square meter (1/m2). In general, gels are detected if the grey value of certain pixels is below 25% of the average grey value, while contaminations are detected below 10% of the average grey value.

### h) Xylene insoluble amount (XHU)

The xylene hot insoluble amount (XHU) is analysed according to ISO 10147:2011. Therefore, 1g of the sample is weighed out exactly to 0.1mg (m1) and placed in a pouch made of stainless-steel mesh of the following material ("stainless steel quality 1.4401"). The pouch with polymer sample is weighed out exactly to 0.1mg (m2) and placed in a round flask filled with 700 mL xylene (ortho- or para-xylene, with a purity chromatography >98%). The xylene is kept under reflux conditions for 5h. The pouch containing the insoluble matter is taken out of the flask, washed from the polymer solution residues with a fresh portion of 700 mL xylene under reflux conditions for another 30 minutes. Afterwards the pouch is taken out of the flask, dried under vacuum at 90°C to constant mass. After cooled to room temperature in a desiccator, the pouch is weighed out exactly to the nearest 0.1 mg ($m_3$).

$$\%XHU = \frac{m_3 - (m_2 - m_1)}{m_1} * 100$$

XHU = Xylene hot insoluble amount
$m_1$ = sample weight in g
$m_2$ = weight of pouch with the sample in g
$m_3$ = weight of pouch with the insoluble residue in g

By evaporating the xylene from the xylene solution, the xylene hot soluble fraction is obtained.

### i) Water content

The water content was determined as described in ISO15512:2019 Method A - Extraction with anhydrous methanol. There the test portion is extracted with anhydrous methanol and the extracted water is determined by a coulometric Karl Fischer Titrator.

**j) Thermogravimetric Analysis (TGA)**

**j-1) Measurement of carbon black content by TGA**

Thermogravimetric Analysis (TGA) experiments were performed with a TA Instruments TGA 5500. Approximately 10-20 mg of materials were placed in a platinum pan. The temperature was equilibrated at 50°C for 10 minutes, and afterwards raised to 900°C under nitrogen at 20°C/min. Afterwards the temperature was lowered to 300°C at 20°C/min, gas switched to oxygen, and the temperature was raised again to 900°C. The weight loss in this final step was assigned to carbon black.

**j-2) Measurement of ash content by TGA**

Thermogravimetric Analysis (TGA) experiments were performed with a TA Instruments TGA 5500. Approximately 15-25 mg of materials were placed in a platinum pan. The temperature was equilibrated at 50°C for 10 minutes, and afterwards raised to 900°C under nitrogen at 20°C/min. The ash content was evaluated as the weight % at 900°C.

**Materials**

The following polyethylene materials were used for preparing the recyclate compositions examined below:

Recyclate polyethylene fractions (rPE)

rPE1 and rPE2 are commercially available low density PE recyclates. rPE1 is primarily based on post-consumer household/municipal waste; whereas rPE2 is primarily based on post-consumer commercial waste. Further properties of rPE1 and rPE2 are given in table 1 herein below.

rPE1:   rPE1 has a density of 928.1 kg/m$^3$, a MFR$_2$ of 1.28 g/10 min, a MFR$_5$ of 4.14 g/10 min and an amount of continuous C3 units (PP) of 2.31 wt.%, determined by quantitative $^{13}$C{$^1$H} -NMR measurement of the soluble fraction.

rPE1:   rPE2 has a density of 931.2 kg/m$^3$, a MFR$_2$ of 0.34 g/10 min, a MFR$_5$ of 1.45 g/10 min and an amount of continuous C3 units (PP) of 0.38 wt.%, determined by quantitative $^{13}$C{$^1$H} -NMR measurement of the soluble fraction.

Component (B)

B1:   LLDPE (bimodal copolymer of ethylene and 1-butene) having a density of 923.0 kg/m$^3$ and MFR2 of 0.85 g/10min; commercially available from Borealis Group.

B2:   HDPE (bimodal copolymer of ethylene and 1-butene) having a density of 946.0 kg/m$^3$, MFR2 of 0.5 g/10min and MFR5 of 2.0 g/1min; commercially available from Borealis Group.

B3:   HDPE (bimodal copolymer of ethylene and 1-hexene) having a density of 949.0 g/m$^3$ and MFR5 of 0.23 g/10min; commercially available from Borealis Group.

Component (C)

C:   Copolymer of ethylene and 1-octene having a density of 868.0 kg/m$^3$ and MFR2 of 0.5 g/10min; commercially available from Borealis Group.

Component (D)

D:  Additive/ Antioxidant - SONGNOX 11B FF (blend of tris(2,4-di-tert-butylphenyl) phosphite and Pentaerythrityl-tetrakis(3-(3',5'-di-tert. butyl-4-hydroxyphenyl)-propionate (1:1)); commercially available from Songwon.

Table 1: Properties of recyclate fractions rPE1 and rPE2 (n.d.: not detected)

|  | rPE1 | rPE2 |
|---|---|---|
| Density [kg/m3] | 928.1 | 931.2 |
| MFR2 [g/10min; 190°C] | 1.28 | 0.34 |
| MFR21 [g/10min; 190°C] |  | 20.34 |
| MFR5 [g/10min; 190°C] | 4.14 | 1.45 |
| NMR LDPE in total PO [%] | 14.89 | 72.73 |
| NMR wtC2total [%] | 92.15 | 94.16 |
| NMR wtC3total [isolated C3] [%] | 0.15 | 0.2 |
| NMR wtC4total [%] | 2.12 | 1.15 |
| NMR wtC6total [%] | 3.05 | 3.05 |
| NMR wtC7total [%] | 0.22 | 1.06 |
| NMR wtPPtotal [continuous C3] [%] | 2.31 | 0.38 |
| OCS Contaminations 100-299$\mu$m [1/m$^2$] | 12.2 | 33.4 |
| OCS Contaminations 300-599$\mu$m [1/m$^2$] | 859.5 | 141.4 |
| OCS Contaminations 600-1000$\mu$m [1/m$^2$] | 449.7 | 12.5 |
| OCS Contaminations >1000$\mu$m [1/m$^2$] | 25.9 | 0.3 |
| OCS Gel 100-299$\mu$m [1/m$^2$] | 255814.9 | 11302.6 |
| OCS Gel 300-599$\mu$m [1/m$^2$] | 9805.8 | 250.3 |
| OCS Gel 600-1000$\mu$m [1/m$^2$] | 51.1 | 2.4 |
| OCS Gel >1000$\mu$m [1/m$^2$] | 0.1 | 0 |
| OIT 200°C [min] | 4.2 | 1.2 |
| TGA carbon black [wt.%] | 0.24 | 0.26 |
| TGA ash [wt.%] | 0.33 | 0.54 |
| Water content [ppm] | 308 | 210 |
| XHU ISO 10147 [%] | 0.31 | 0.23 |
| XRF Fe [ppm] | 68 | 59 |
| XRF Ti [ppm] | 205 | 52 |
| XRF Zn [ppm] | 199 | 53 |
| XRF Cl [ppm] | 333 | 120 |
| XRF S [ppm] | 52 | 19 |
| XRF_Co (ppm) | n.d. | n.d. |
| XRF_Cu (ppm) | n.d. | n.d. |
| XRF_Mo (ppm) | n.d. | n.d. |

*Preparation of compositions according to comparative and inventive examples*

The compositions according to CE1 to CE3 and IE1 to IE3 were prepared by blending of the recyclate fractions (rPE) with the virgin polyethylenes (components (B) and/ or (C)) on a Coperion W&P ZSK 32-mm co-rotating, twinscrew extruder (L/D=48) at barrel temperatures of up to 230°C and screw speed of 300 rpm.

The obtained polyethylene recyclate compositions and the measured properties thereof are shown in Tables 2 to 4 below.

Table 2: Compositions according to comparative and inventive examples; all amounts given in wt.% based on the total weight of the composition.

|  | CE1 | IE1 | CE2 | IE2 | CE3 | IE3 |
|---|---|---|---|---|---|---|
| **rPE2** |  | 50 |  | 50 |  | 50 |
| **rPE1** | 50 |  | 50 |  | 50 |  |
| **[B1]** | 34.8 | 34.8 |  |  | 49.8 | 49.8 |
| **[B2]** |  |  | 39.8 | 39.8 |  |  |
| **[B3]** |  |  | 10 | 10 |  |  |
| **[C]** | 15 | 15 |  |  |  |  |
| **[D]** | 0.2 | 0.2 | 0.2 | 0.2 | 0.2 | 0.2 |
| **MFR2 [g/10min, 190°C]** | 0.93 | 0.48 | 0.64 | 0.41 | 1.1 | 0.52 |
| **MFR21 [g/10min, 190°C]** | 45.89 | 26.75 | 34.12 | 19.7 | 52.32 | 33.15 |
| **MFR5 [g/10min, 190°C]** | 3.37 | 1.87 | 2.12 | 1.24 | 3.52 | 1.93 |
| **Density [kg/m$^3$]** | 917.3 | 919.5 | 937.8 | 939.3 | 925.8 | 927.4 |
| **OIT 200°C [min]** | 17.9 | 127.9 | 18.8 | 139.8 | 18 | 203.8 |
| **Water content [ppm]** | 214.9 | 261.4 | 146.2 | 82.3 | 213.6 | 245.8 |
| **NMR wtC2total [%]** | 93.26 | 94.19 | 95.17 | 96 | 92.2 | 93.46 |
| **NMR wtC3total [isolated C3] [%]** | 0.06 | 0.08 | n.d. | n.d. | n.d. | n.d. |
| **NMR wtC4total [%]** | 3.75 | 3.41 | 2.03 | 1.51 | 4.74 | 4.57 |
| **NMR wtC6total [%]** | 1.55 | 1.45 | 1.69 | 1.78 | 1.5 | 1.52 |
| **NMR wtPPtotal [continuousC3] [%]** | 1.02 | 0.32 | 1.11 | 0.21 | 1.09 | 0.18 |
| **NMR wtC7total [%]** | 0.35 | 0.55 | 0 | 0.5 | 0.46 | 0.28 |
| n.d.: not determinable, e.g., lower than limit of detection and/or lower than limit of quantification |  |  |  |  |  |  |

Table 3: OCS results for comparative and inventive examples

|  | CE1 | IE1 | CE2 | IE2 | CE3 | IE3 |
|---|---|---|---|---|---|---|
| **OCS Contaminations 100-299 $\mu$m [1/m$^2$]** | 4.4 | 7 | 3.2 | 6 | 8.3 | 8.7 |
| **OCS Contaminations 300-599 $\mu$m [1/m$^2$]** | 970.1 | 95.4 | 800.4 | 72.3 | 981 | 90.4 |
| **OCS Contaminations 600-1000 $\mu$m [1/m$^2$]** | 340.1 | 10.8 | 305.4 | 8.4 | 326.7 | 9.2 |
| **OCS Contaminations >1000 $\mu$m [1/m$^2$]** | 18.8 | 0.1 | 17.8 | 0 | 20.8 | 0 |
| **OCS Gel 100-299 $\mu$m [1/m$^2$]** | 112155 | 6349 | 98837 | 8070 | 121182 | 5912 |
| **OCS Gel 300-599 $\mu$m [1/m$^2$]** | 2410 | 298 | 3086 | 385 | 2269 | 223 |
| **OCS Gel 600-1000 $\mu$m [1/m$^2$]** | 1.1 | 0.8 | 3.5 | 1.4 | 1.1 | 0.3 |
| **OCS Gel >1000$\mu$m [1/m$^2$]** | 0 | 0 | 0 | 0 | 0 | 0 |

Table 4: Tensile properties - weathering resistance

|  | CE1 | IE1 | CE2 | IE2 | CE3 | IE3 |
|---|---|---|---|---|---|---|
| **tensile modulus (MPa) without weathering** | 303 | 305 | 620 | 638 | 410 | 405 |
| **strain at break (%) without weathering** | 727.7 | 733.1 | 736.7 | 744.7 | 736.5 | 729.1 |
| **stress at break (MPa) without weathering** | 21.4 | 20.2 | 23.7 | 22.9 | 22.0 | 20.8 |
| **strain at break (%) with weathering 1000 hours** | 44 | 741 |  |  |  |  |
| **stress at break (MPa) with weathering 1000 hours** | 1.8 | 18.9 |  |  |  |  |
| **strain at break (%) with weathering 2000 hours** | 29.9 | 623.0 |  |  |  |  |
| **stress at break (MPa) with weathering 2000 hours** | 0.69 | 12.8 |  |  |  |  |

As evidenced by comparison between the inventive and comparative examples, compositions in accordance with the present invention show improved OIT and weathering resistance.

In addition to the above, it is pointed out that the improved weathering resistance of the inventive examples as compared to comparative examples is unexpected, since the higher LDPE content in rPE2 (as compared to rPE1) suggests a different outcome. The higher LDPE content of rPE2 is evidenced by NMR measurements (see table 1).

**Claims**

1. A mixed virgin/ recycled polyethylene composition having a melt flow rate, $MFR_2$, in a range of from 0.01 to 2.0 g/10min, determined according to ISO1133:2022, and a density in a range of from 900.0 to 965.0 kg/m$^3$, determined according to ISO 1183-1:2019; the composition comprising 35.0 wt.% or more of a recycled polyethylene fraction (rPE), relative to the total weight of the mixed virgin/ recycled polyethylene composition; wherein said recycled polyethylene fraction (rPE) has:

   a) a total amount of ethylene units (C2 units) of at least 90.0 wt.% as determined by quantitative $^{13}C\{^1H\}$ NMR spectroscopy as described herein;
   b) a total amount of continuous propylene units (C3 units) in an amount of from 0.0 to 2.0 wt.% determined by quantitative $^{13}C\{^1H\}$ NMR spectroscopy as described herein;
   c) at least one of

      c1) a content of iron (Fe) of 65 ppm or less,
      c2) a content of titanium (Ti) of 100 ppm or less,
      c3) a content of zinc (Zn) of 100 ppm or less,
      c4) a content of chlorine (Cl) of 200 ppm or less, or
      c5) a content of sulphur (S) of 40 ppm or less,
      determined by x-ray fluorescence (XRF) as described herein;

   wherein a total content of Fe, Ti, Zn, Cl and S amounts to at least 10 ppm;
   and wherein said mixed virgin/ recycled polyethylene composition further comprises at least one virgin polyethylene component (B).

2. The mixed virgin/ recycled polyethylene composition according to claim 1, further comprising a second virgin polyethylene component (C).

3. The mixed virgin/ recycled polyethylene composition according to claim 1 or 2, wherein said composition is free of metal deactivators.

4. The mixed virgin/ recycled polyethylene composition according to any one of the preceding claims further comprising at least one antioxidant.

5. The mixed virgin/ recycled polyethylene composition according to any one of the preceding claims, wherein

   a OCS gel content > 1000μm of said recycled polyethylene fraction (rPE) is at most 100/m$^2$, preferably at most

$50/m^2$ and more preferably at most $10/m^2$; and/ or

wherein a OCS gel content in a range of from 600 to 1000 $\mu$m of said recycled polyethylene fraction (rPE) is of at most $200/m^2$, preferably of at most $150/m^2$ and more preferably of at most $50/m^2$.

6. The mixed virgin/ recycled polyethylene composition according to any one of the preceding claims, wherein said recycled polyethylene fraction (rPE) simultaneously has at least two, preferably at least three and more preferably all of the following properties:

   c1) a content of iron (Fe) of 65 ppm or less,
   c2) a content of titanium (Ti) of 100 ppm or less,
   c3) a content of zinc (Zn) of 100 ppm or less,
   c4) a content of chlorine (Cl) of 200 ppm or less, and
   c5) a content of sulphur (S) of 40 ppm or less,

determined by x-ray fluorescence (XRF) as described herein.

7. The mixed virgin/ recycled polyethylene composition according to any one of the preceding claims, wherein said at least one virgin polyethylene component (B) is selected from ethylene homo- or copolymers having a density in a range of from 910.0 to 960.0 $kg/m^3$, determined according to ISO 1183-1:2019, and a MFR2 in a range of from 0.01 to 2.0 g/10min and/ or a MFR5 in a range of from 0.01 to 10.0 g/10min, determined according to ISO 1133:2022.

8. The mixed virgin/ recycled polyethylene composition according to any one of the preceding claims further comprising a second virgin polyethylene component (C), wherein said second virgin polyethylene component (C) is an ethylene copolymer.

9. The mixed virgin/ recycled polyethylene composition according to claim 8, wherein said second virgin polyethylene component (C) is a copolymer of ethylene and 1-octene, preferably having a density in a range of from 850.0 to 880.0 $kg/m^3$, determined according to ISO 1183-1:2019, and a MFR2 in a range of from 0.2 to 0.8 g/10min, determined according to ISO 1133:2022.

10. The mixed virgin/ recycled polyethylene composition according to any one of the preceding claims having a strain at break of at least 500% without weathering.

11. The mixed virgin/ recycled polyethylene composition according to any one of the preceding claims having a stress at break of at least 15.0 MPa without weathering.

12. The mixed virgin/ recycled polyethylene composition according to any one of the preceding claims a OIT at 200°C of at least 60 min.

13. A method for preparing a mixed virgin/ recycled polyethylene composition according to any one of claims 1 to 12, comprising the steps of melting, blending, and extruding the recycled polyethylene fraction (rPE), the at least one virgin polyethylene component (B), and optionally a second virgin polyethylene component (C) in an extruder.

14. Article comprising the mixed virgin/ recycled polyethylene composition according to any one of claims 1 to 12.

15. Use of a mixed virgin/ recycled polyethylene composition according to any one of claims 1 to 12 for the production of wire and/ or cable jacketing.

Europäisches Patentamt
European Patent Office
Office européen des brevets

## EUROPEAN SEARCH REPORT

**Application Number**

EP 24 18 9214

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/327583 A1 (EK CARL-GUSTAF [SE] ET AL) 15 November 2018 (2018-11-15) * tables 1, 2: ie 3 * | 1-15 | INV. C08L23/0807 |
| A | US 2023/272196 A1 (BRIGANDI PAUL J [US] ET AL) 31 August 2023 (2023-08-31) * table 2, 6, ex 3, 6 * | 1-15 | |
| A | US 2023/227636 A1 (LIU YI [AT] ET AL) 20 July 2023 (2023-07-20) * table 3, 4, ie 1, 2, 3 * | 1-15 | |
| A | US 2023/203287 A1 (LIU YI [AT] ET AL) 29 June 2023 (2023-06-29) * ie 1, 2 tables 2, 3, 4 * | 1-15 | |
| A | EP 3 196 245 A1 (FURUKAWA ELECTRIC CO LTD [JP]) 26 July 2017 (2017-07-26) * table 2, 5 * | 1-15 | |
| A | CN 106 336 555 A (UNIV FOSHAN) 18 January 2017 (2017-01-18) * emb 1-4 * | 1-15 | **TECHNICAL FIELDS SEARCHED (IPC)** C08L |

The present search report has been drawn up for all claims

| Place of search | Date of completion of the search | Examiner |
|---|---|---|
| Munich | 8 January 2025 | Ritter, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9214

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | Publication date |
|---|---|---|---|
| US 2018327583 A1 | 15-11-2018 | AU 2015371394 A1 | 25-05-2017 |
| | | BR 112017011523 A2 | 27-02-2018 |
| | | CA 2968647 A1 | 30-06-2016 |
| | | CN 107001733 A | 01-08-2017 |
| | | EP 3237533 A1 | 01-11-2017 |
| | | ES 2699023 T3 | 06-02-2019 |
| | | HU E040413 T2 | 28-03-2019 |
| | | JP 6309171 B2 | 11-04-2018 |
| | | JP 2017538003 A | 21-12-2017 |
| | | KR 20170082639 A | 14-07-2017 |
| | | MX 357229 B | 02-07-2018 |
| | | MY 183316 A | 18-02-2021 |
| | | PL 3237533 T3 | 28-02-2019 |
| | | RU 2669370 C1 | 11-10-2018 |
| | | SG 11201704787Q A | 28-07-2017 |
| | | US 2018327583 A1 | 15-11-2018 |
| | | WO 2016102341 A1 | 30-06-2016 |
| US 2023272196 A1 | 31-08-2023 | BR 112023002145 A2 | 14-03-2023 |
| | | CA 3187547 A1 | 10-02-2022 |
| | | CN 116113648 A | 12-05-2023 |
| | | EP 4192890 A1 | 14-06-2023 |
| | | JP 2023538501 A | 08-09-2023 |
| | | KR 20230048349 A | 11-04-2023 |
| | | US 2023272196 A1 | 31-08-2023 |
| | | WO 2022031398 A1 | 10-02-2022 |
| US 2023227636 A1 | 20-07-2023 | CN 115516027 A | 23-12-2022 |
| | | EP 4153674 A1 | 29-03-2023 |
| | | US 2023227636 A1 | 20-07-2023 |
| | | WO 2021233819 A1 | 25-11-2021 |
| US 2023203287 A1 | 29-06-2023 | CN 115516028 A | 23-12-2022 |
| | | EP 4153675 A1 | 29-03-2023 |
| | | US 2023203287 A1 | 29-06-2023 |
| | | WO 2021233820 A1 | 25-11-2021 |
| EP 3196245 A1 | 26-07-2017 | DK 3196245 T3 | 07-08-2023 |
| | | EP 3196245 A1 | 26-07-2017 |
| | | JP 5788072 B1 | 30-09-2015 |
| | | JP 2016060849 A | 25-04-2016 |
| | | WO 2016043207 A1 | 24-03-2016 |
| CN 106336555 A | 18-01-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2091530 A
- WO 2000058975 A1
- GB 2252324 A
- WO 2018146628 A1
- CN 112745547 A
- EP 1327664 A1
- EP 4023712 A1